# EUROPÄISCHE PATENTSCHRIFT

(11) **EP 2 434 424 B1**
(45) Veröffentlichungstag und Bekanntmachung des Hinweises auf die Patenterteilung: **11.06.2014**
(21) Anmeldenummer: 11182188.0
(22) Anmeldetag: 21.09.2011
(51) Int. Cl.: G06F 21/00, H04L 9/32

(54) **Verfahren zur Erhöhung der Sicherheit von sicherheitsrelevanten Online-Diensten**
Method for increasing the security of security-relevant online services
Procédé d'augmentation de la sécurité de services en ligne relevant de la sécurité

(30) Priorität: 27.09.2010 DE 102010037784
(43) Veröffentlichungstag der Anmeldung: 28.03.2012
(73) Patentinhaber: Kobil Systems GmbH, 67547 Worms (DE)
(72) Erfinder: Koyun, Ismet, 67550 Worms (DE); Tak, Markus, 69488 Birkenau (DE)
(74) Vertreter: Cohausz & Florack

(56) Entgegenhaltungen:
- EP-A1- 1 471 405
- EP-A1- 1 936 574
- WO-A1-99/39475
- WO-A1-2008/034900
- US-A- 6 108 420
- US-A1- 2001 051 928
- US-A1- 2008 034 210

## Beschreibung

### Gebiet der Erfindung

Die Erfindung betrifft ein Verfahren zur Erhöhung der Sicherheit von sicherheitsrelevanten Online Diensten. Darüber hinaus betrifft die Erfindung ein entsprechendes Computerprogramm, eine entsprechende Datenträgervorrichtung, eine entsprechende Datenverarbeitungseinrichtung, ein entsprechendes System und ein entsprechendes Datenpaket.

### Hintergrund der Erfindung

Heutzutage wird eine Vielzahl von sicherheitsrelevanten Diensten über das Internet durchgeführt. So ist es beispielsweise bekannt, Bankgeschäfte oder Zahlungen über das Internet durchzuführen. Online Anwendungen, wie das Online Banking oder das Online Payment, stellen jedoch ein Ziel für Hacker dar, die die sicherheitsrelevanten Daten eines Benutzers auskundschaften und in dessen Namen mit diesen Daten Online Transaktionen durchführen wollen. Beispielsweise werden die Authentifizierungsdaten des Anwenders mittels verschiedener Techniken, wie Phishing- oder Trojaner- Techniken, entwendet und anschließend zur Zahlung verwendet.

Gemäß dem Stand der Technik werden sicherheitsrelevante Dienste, wie Online Banking und dergleichen, über Netzzugriffprogramme, wie z.B. herkömmliche Internet Browser und dergleichen, durchgeführt. Über ein solches Browserprogramm öffnet ein Benutzer beispielsweise eine Internetseite eines Dienstanbieters, z.B. einer Bank. Bevor der Benutzer jedoch eine sicherheitsrelevante Transaktion bzw. einen solchen Dienst, wie eine Überweisung, durchführen kann, authentisiert sich der Benutzer bei der Bank. Hierfür muss der Benutzer beispielsweise den Benutzernamen und ein Passwort eingeben. Der Benutzer überträgt also von seiner Datenverarbeitungseinrichtung, wie einem Computer, zumindest ein Authentifizierungsmerkmal an die Bank, insbesondere an deren Datenverarbeitungseinrichtung, wie einem Server. Die übertragenen Daten werden mit von der Bank gespeicherten Daten verglichen und dem Benutzer wird bei einem positiven Vergleichsergebnis die Durchführung des entsprechenden Dienstes erlaubt. Auch kann eine Authentifizierung durch andere kryptographische Operationen, wie z.B. eine Signaturprüfung, durchgeführt werden.

Durch die zuvor genannten Techniken der Hacker, insbesondere durch einen so genannten "Man-in-the-Browser" Angriff, ist es jedoch möglich, ein Netzzugriffprogramm, wie z.B. ein Internet Browser, zu manipulieren. So ist es beispielsweise bei einem manipulierten Internet Browser möglich, dass ein Benutzer seine Authentisierungsdaten, wie beispielsweise eine PIN Nummer, ein Passwort oder dergleichen in herkömmlicher Weise eingibt, um den entsprechenden Dienst bzw. die Transaktion, wie eine Überweisung, freizuschalten. Durch die Manipulation des Internet Browsers wird jedoch das Geld nicht an den gewünschten Empfänger, sondern an ein von dem Hacker angegebenes Konto überwiesen.

Aus dem Stand der Technik sind zur Verbesserung der Sicherheit Verfahren bekannt, bei denen Hardware Komponenten eingesetzt werden. Beispielsweise werden Verfahren mit Einmal-Passwörtern und Smartcards eingesetzt. Diese Verfahren werden auch 2-Faktor-Authentifizierungs Verfahren (Besitz und Wissen) genannt. Zum einen "weiß" ein Benutzer etwas, z.B. das Passwort, und zum anderen "besitzt" der Benutzer etwas, z.B. die Smartcard, ein USB-Massenspeicher, etc. Diese 2-Faktor-Authentifizierung erhöht zwar die Sicherheit, jedoch steigen bei diesem Verfahren auch die Kosten. Insbesondere bei einer großen Verbreitung, die beim Online Banking im Millionenbereich liegen kann, sind die Kosten hoch.

Aus der Patentanmeldung WO 2008/034900 A1 ist ein Verfahren zum Schutz eines Computerprogramms gegen Manipulation und zum Abschirmen seiner Kommunikation mit anderen Programmen gegen Abhören bekannt. Das Verfahren umfasst das Erzeugen von individualisierten Programmkopien für verschiedene Benutzergruppen, das Einfügen oder die Ableitung von individuellen kryptographischen Schlüsseln aus dem Programmcode, das Verschleiern des Programmcodes und das Selbstauthentisieren des Programms gegenüber anderen Programmen. Das Verfahren ist anwendbar für den Schutz von Online-Banking, Online-Investment, Online-Entertainment, digitalem Rechtemanagement und anderen elektronischen Handelsanwendungen.

Aus der Patentanmeldung US 2001/051928 A1 ist eine Anordnung, ein Verfahren und ein System zur Personalisierung veröffentlichter Software gemäß einem spezifischen autorisiertem Benutzer bekannt. Dabei wird Schutz gegen unautorisiertes Kopieren und Verteilen ermöglicht, indem der autorisierte Benutzer vom wahllosen Erstellen und Verteilen unautorisierter Kopien abgeschreckt wird. Die Personalisierung ist in die Software eingefügt und wird dem autorisierten Benutzer mit eingebetteten bereits existierenden personenbezogenen Informationen geliefert, ohne dass der Benutzer diese Informationen während eines Setups oder einer Installation eingeben muss. Weil die Informationen bereits in die auslieferbare veröffentlichte Software eingebettet sind, wenn der Benutzer sie empfängt, und keine manuelle Eingabe durch den Benutzer notwendig ist, kann starke Kryptographie mit komplexen Schlüsseln zur Authentisierung und für Schutzzwecke angewendet werden. Da jede Auslieferung an einen autorisierten Benutzer auf einem individuellen, personalisierten Softwareaufbau basiert, haben die ausführbaren Module jeder der verteilten autorisierten Kopien der Software eine einzigartige binäre Form, die signifikant variieren kann, einschließlich Variationen in der Größe der ausführbaren Module, während die Benutzerfunktionalität vollständig identisch ist. Diese Variationen führen zu weiterem Schutz der Software, indem konstante Programmadressen, die mit automatisierten Schutz außerbetriebsetzenden Programmen einfach zu analysieren und anzugreifen sind, eliminiert werden.

Aus der Patentanmeldung US 2008/0034210 A1 ist ein sicheres Datenkommunikationssystem und ein Verfahren zu Verwendung in Verbindung mit einem möglicherweise unsicheren Hostcomputer bekannt. Das System enthält ein Speichermedium, das mit dem möglicherweise unsicheren Computer verbindbar ist. Das System enthält auch einen gehärteten stand-alone Browser, der auf dem Speichermedium gespeichert ist. Das System kann auch Client-Authentifizierungsdaten und/oder zusätzliche Programmdaten enthalten. Der Browser kann die Client-Authentifizierungsdaten verwenden, um eine sichere Kommunikation zu ermöglichen. Die Client-Authentifizierungsdaten können auf dem Speichermedium gespeichert sein. Eine Ausführungsform der Patentanmeldung US 2008/0034210 A1 betrifft einen Wechseldatenträger, der eine 2-Faktor-Authentifizierung ermöglichen soll.

Aus dem Patent US 6,108,420 ist ein Verfahren bekannt, um eine einzigartige, anwenderspezifische Instanz einer Softwareandwendung zu erzeugen, zu verteilen und auf einem Installationscomputer zu installieren, wobei die Instanz der Softwareanwendung authentifizierbar und zu einem bestimmten Anwender zurückverfolgbar ist. Ein sicherer Distributionsagent, der sich auf einem Distributionscomputer befindet, sammelt Identifizierungsinformationen und berechnet eine kryptographische Signatur der Softwareanwendung und der Identifizierungsinformationen. Die Identifizierungsinformationen und die kryptographische Signatur werden durch den sicheren Distributionsagenten in die Softwareanwendung eingebettet. Die Softwareanwendung mit den eingebetteten Daten kann über einen Distributionskanal zum Installationscomputer übertragen werden. Ein Anwenderinstallationsagent, der sich auf dem Installationscomptuer befindet, steuert die Installation der Sofwareanwendung mit den eingebetteten Daten auf dem Installationscomputer. Vor der Installation kann der Anwenderinstallationsagent die kryptographische Signatur verwenden, um die Authentizität der Softwareanwendung und der Identifizierungsinformationen zu verifizieren. Eine Ausführungsform des Patents US 6,108,420 betrifft die Verschlüsselung von Originalinhalten mit einem privaten Schlüssel durch den sicheren Distributionsagent und die Übertragung des korrespondierenden öffentlichen Schlüssels mit einer zusammengesetzten Distributionsdatei, die die verschlüsselten Originalinhalte enthält, über den Distributionskanal an den Anwenderinstallationsagent. Der Anwenderinstallationsagent entschlüsselt dann die zusammengesetzte Distributionsdatei mit dem öffentlichen Schlüssel.

Aus der Patentanmeldung EP 1 471 405 A1 ist ein Verfahren und ein Gerät zum Schutz von Informationen gegen unautorisierte Benutzung bekannt. Informationen, die ein Anwender erhält, sind durch eine asymmetrisches Verschlüsselungsverfahren unter Verwendung eines Benutzerschlüssels, der von einem Distributor der Informationen empfangen wird, verschlüsselt. Vor der Verwendung werden die Informationen mit Hilfe eines privaten Schlüssels des Anwenders entschlüsselt. Um den Schutz zu erhöhen, kann die Entschlüsselung direkt in der CPU des Computers des Anwenders in einer Art und Weise ausgeführt werden, dass die entschlüsselten Informationen nicht außerhalb des Prozessors existieren.

### Zusammenfassung einiger beispielhafter Ausführungsformen der vorliegenden Erfindung

Eine Aufgabe der vorliegenden Erfindung ist es deshalb, die oben genannten Nachteile zu überwinden.

Diese Aufgabe wird gelöst durch ein Verfahren gemäß Patentanspruch 1. Des Weiteren wird die der Erfindung zugrunde liegende Aufgabe durch ein Computerprogramm gemäß Patentanspruch 13, eine Datenverarbeitungseinrichtung gemäß Patentanspruch 14 und ein System gemäß Patentanspruch 15 gelöst. Vorteilhafte Ausgestaltungen sind den abhängigen Patentansprüchen zu entnehmen.

Das erfindungsgemäße Verfahren umfasst das Erzeugen eines Datenpakets, das zumindest ein gehärtetes Netzzugriffprogramm und zumindest ein personenbezogenes Authentifizierungsmerkmal umfasst, in einer ersten Datenverarbeitungseinrichtung, wobei das Datenpaket das zumindest eine personenbezogene Authentifizierungsmerkmal neben dem zumindest einen Netzzugriffprogramm umfasst, das Verschlüsseln des Datenpakets und das Bereitstellen des Datenpakets für eine Übertragung an eine weitere Datenverarbeitungseinrichtung, wobei das übertragene Datenpaket mit einem personenbezogenen Schlüssel auf der weiteren Datenverarbeitungseinrichtung entschlüsselbar ist, derart, dass das Netzzugriffprogramm ausführbar und durch das personenbezogene Authentifizierungsmerkmal authentifizierbar ist.

Gemäß der Erfindung wird ein personenbezogener Schlüssel erzeugt. Es kann also ein individueller und einmaliger Schlüssel, welcher nur einem einzigen Benutzer, nämlich dem zuvor genannten Benutzer, zugeordnet ist, erzeugt werden. Das erzeugte individuelle Datenpaket kann nur mit dem personenbezogenen Schlüssel entschlüsselbar werden. Auch kann dieser Schlüssel zur Verschlüsselung des Datenpakets in der ersten Datenverarbeitungseinrichtung vorgesehen sein. Es versteht sich, dass neben dieser symmetrischen Verschlüsselung auch eine asymmetrische Verschlüsselung, also unterschiedliche Schlüssel zur Ver- und Entschlüsselung, vorgesehen sein können.

Ein Netzzugriffprogramm mit einer Härtungsfunktion, also ein gehärtetes Netzzugriffprogramm, ist beispielsweise ein gehärteter Browser. Unter Härten versteht man in der Computertechnik beispielsweise, nur dedizierte Software einzusetzen, die für den Betrieb des Systems notwendig ist und deren unter Sicherheitsaspekten korrekter Ablauf garantiert werden kann. So können bei einem gehärteten Netzzugriffprogramm sämtliche Softwarebestandteile und Funktionen entfernt werden, die zur Erfüllung der vorgesehenen Aufgabe durch das Netzzugriffprogramm nicht zwingend notwendig sind.

Die Härtungsfunktion kann insbesondere dafür sorgen, dass das Netzzugriffprogramm während der Ausführung auf einer Datenverarbeitungseinrichtung geschützt ist.

Neben diesem Netzzugriffprogramm umfasst das Datenpaket zumindest ein personenbezogenes Authentifizierungsmerkmal. Ein personenbezogenes Authentifizierungsmerkmal ist beispielsweise ein individuelles und einmaliges Merkmal, welches nur einem einzigen Benutzer zugeordnet ist, wie beispielsweise ein Passwort, Softwarezertifikate oder dergleichen. Eine Verknüpfung des Authentifizierungsmerkmals mit dem Netzzugriffprogramm führt zu einem personenbezogenen Datenpaket. Insbesondere ist dieses Datenpaket einem einzigen Benutzer zugeordnet und einmalig. Mit dem Authentifizierungsmerkmal kann beispielsweise auf der ersten Datenverarbeitungseinrichtung überprüft werden, ob das Netzzugriffprogramm bzw. der Benutzer des Netzzugriffprogramms zur Ausführung eines Dienstes eines Online-Anbieters berechtigt ist. Wenn der Benutzer autorisiert ist, kann das Netzzugriffprogramm authentisiert werden.

Das erzeugte Datenpaket wird verschlüsselt. Insbesondere vor der Übertragung des Datenpakets kann dieses verschlüsselt werden.

Nach einer Verschlüsselung des Datenpakets kann das Datenpaket für eine Übertragung an den Benutzer, insbesondere an eine weitere Datenverarbeitungseinrichtung des Benutzers, bereitgestellt werden. Es versteht sich, dass die Verschlüsselung im Rahmen des Zusammenfügens des Datenpakets durchgeführt werden kann. Insbesondere wird das Datenpaket derart bereitgestellt, dass der Benutzer in Kenntnis des ihm/ihr zugeordneten personenbezogenen Schlüssels das Datenpaket auf der weiteren Datenverarbeitungseinrichtung entschlüsseln und das Netzzugriffprogramm ausführen und nach einer erfolgreichen Authentifizierung einen sicherheitsrelevanten Dienst durchführen kann. Der personenbezogene Schlüssel ist bevorzugt ein individueller und einmaliger Schlüssel, welcher nur einem einzigen Benutzer zugeordnet ist. Es kann ein symmetrisches oder asymmetrisches Verschlüsselungsverfahren eingesetzt werden.

Zum Beispiel kann das Datenpaket mit dem personenbezogenen Schlüssel symmetrisch verschlüsselt sein. Es ist denkbar, dass der personenbezogene Schlüssel dem Authentifizierungsmerkmal entspricht. In diesem Fall hätte der Benutzer allerdings Kenntnis von dem Authentifizierungsmerkmal.

Es ist auch denkbar, dass der personenbezogene Schlüssel dem Authentifizierungsmerkmal nicht entspricht, so dass der Benutzer keine Kenntnis von dem Authentifizierungsmerkmal hat. Dies ist beispielsweise vorteilhaft, um zu verhindern, dass der Benutzer das Authentifizierungsmerkmal unabhängig von dem Netzzugriffprogramm verwendet.

Durch die Verschlüsselung des erzeugten Datenpakets kann eine Bindung zwischen dem Netzzugriffprogramm und dem Authentifizierungsmerkmal beispielsweise derart erfolgen, dass das Authentifizierungsmerkmal nur zusammen mit dem Netzzugriffprogramm nutzbar ist. Das Authentifizierungsmerkmal und das Netzzugriffprogramm sind in dem Datenpaket durch die Verschlüsselung geschützt. Die Härtungsfunktion kann das während der Ausführung des Netzzugriffsprogramms auf einer Datenverarbeitungsanlage entschlüsselte Netzzugriffprogramm und/oder das entschlüsselte Authentifizierungsmerkmal schützen.

Im Gegensatz zum Stand der Technik wird dem Benutzer also ein spezielles Programm zur Ausführung eines sicherheitsrelevanten Dienstes zur Verfügung gestellt, welches ausschließlich für diesen Dienst konzipiert ist. Dieses Programm ist bereits mit zumindest einem Authentifizierungsmerkmal verbunden. Hierdurch reduziert sich die Gefahr von Manipulationen signifikant. Insbesondere ist ein Benutzer gezwungen, dieses ihm/ihr zugeordnete Netzzugriffprogramm und kein anderes zu benutzen. Das personenbezogene Authentifizierungsmerkmal ist nur in diesem Datenpaket und nicht in anderen Datenpaketen integriert. Darüber hinaus wird zur Erhöhung der Sicherheit dieses Programm vor einer Übertragung personenbezogen, also individuell, verschlüsselt. Insbesondere kann die Verschlüsselung auch dazu dienen, das Authentifizierungsmerkmal fest an das Netzzugriffprogramm zu binden. Der Benutzer kann die beiden Komponenten also nicht trennen und z.B. das Authentifizierungsmerkmal in einem anderen Netzzugriffprogramm nutzen. Ferner kann eine hohe Sicherheit im Gegensatz zum Stand der Technik ohne zusätzliche Hardware gewährleistet werden. Dementsprechend können die Kosten mit dem erfindungsgemäßen Verfahren reduziert werden.

Das erfindungsgemäße Computerprogramm umfasst Programmanweisungen, die einen Prozessor zur Ausführung des erfindungsgemäßen Verfahrens veranlassen, wenn das Computerprogramm auf dem Prozessor läuft. Dabei kann der Prozessor beispielsweise Teil der Datenverarbeitungseinrichtung sein, auf der das entsprechende Verfahren ausgeführt wird. Ein Computerprogramm kann zumindest teilweise Software und/oder Firmware eines Prozessors sein.

Ein erfindungsgemäßes Computerprogramm kann z.B. auf einer Datenträgervorrichtung, beispielsweise einem computerlesbaren Speichermedium enthalten sein , das z.B. als magnetisches, elektrisches, elektro-magnetisches, optisches und/oder andersartiges Speichermedium ausgebildet ist.

Eine solche Datenträgervorrichtung ist beispielsweise tragbar oder in einer Vorrichtung fest installiert. Beispiele für eine solche Datenträgervorrichtung sind nicht-flüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll insbesondere so verstanden werden, dass das Speichermedium von einem Computer bzw. einer Datenverarbeitungseinrichtung (aus)gelesen und/oder beschrieben werden kann, beispielsweise von einem Prozessor.

Eine erfmdungsgemäße Datenverarbeitungseinrichtung umfasst Mittel zur Ausführung des erfindungsgemäßen Verfahrens, wobei die Datenverarbeitungseinrichtung softwaremäßig eingerichtet ist, um das Verfahren ausführen zu können.

Unter softwaremäßig eingerichtet soll dabei insbesondere die Vorbereitung der Datenverarbeitungseinrichtung verstanden werden, die notwendig ist, um ein Verfahren beispielsweise in Form eines Computerprogramms ausführen zu können. Diese Vorbereitung wird häufig als Installation bezeichnet.

Es ist denkbar, dass die erfindungsgemäßen Computerprogramme durch Mittel der erfindungsgemäßen Datenverarbeitungseinrichtung, z.B. einem Prozessor, ausgeführt werden. Unter Prozessor sollen unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASIC) oder Field Programmable Gate Arrays (FPGA) verstanden werden.

Die erfindungsgemäße Datenverarbeitungseinrichtung umfasst des Weiteren Mittel zur Verbindung mit der Datenträgervorrichtung. Diese Mittel können z.B. eine zur Datenschnittstelle der Datenträgervorrichtung korrespondierende Datenschnittstelle sein.

Die erfindungsgemäße Datenverarbeitungseinrichtung umfasst einen Authentifizierungsgenerator zum Erzeugen eines personenbezogenen Authentifizierungsmerkmals, einen Datenpaketgenerator zum Erzeugen eines Datenpakets umfassend zumindest ein Netzzugriffprogramm mit einer Härtungsfunktion und das erzeugte personenbezogenen Authentifizierungsmerkmal, einen Schlüsselgenerator zum Erzeugen eines personenbezogenen Schlüssels, einen Verschlüsselungsgenerator zum Verschlüsseln des Datenpakets mit dem erzeugten personenbezogenen Schlüssel, und ein Übertragungsmodul zum Bereitstellen des verschlüsselten Datenpakets für eine Übertragung an eine weitere Datenverarbeitungseinrichtung, so dass das übertragene Datenpaket mit dem personenbezogenen Schlüssel auf der weiteren Datenverarbeitungseinrichtung entschlüsselbar ist, derart, dass das Netzzugriffprogramm ausführbar ist.

Das erfindungsgemäße System umfasst eine erfindungsgemäße Datenverarbeitungseinrichtung und zumindest eine weitere Datenverarbeitungseinrichtung. Beispielsweise kann die erfindungsgemäße Datenverarbeitungseinrichtung ein Server sein, der von einem Dienstanbieter, zur Verfügung gestellt wird, während die weiteren Datenverarbeitungseinrichtungen der Benutzer, die den angebotenen Dienst in Anspruch nehmen wollen, beispielsweise Computer, Smartphones, und dergleichen sein können.

Im Folgenden werden beispielhafte Ausgestaltungen der vorliegenden Erfindung beschrieben, welche auf weitere beispielhafte Merkmale des erfmdungsgemäßen Verfahrens, Computerprogramms, Datenverarbeitungseinrichtung und Systems abstellen. Insbesondere sollen durch die Beschreibung eines zusätzlichen Verfahrenschritts des erfindungsgemäßen Verfahren auch als offenbart gelten Mittel zur Durchführung des Verfahrenschritts der entsprechenden erfindungsgemäßen Datenverarbeitungseinrichtung und eine entsprechende Programmanweisung des entsprechenden erfindungsgemäßen Computerprogramms, die einen Prozessor zur Ausführung des Verfahrensschritts veranlasst, wenn das Computerprogramm durch den Prozessor ausgeführt wird. Das Gleiche soll auch für die Offenbarung eines Mittels zur Durchführung eines Verfahrensschritts oder einer Programmanweisung gelten, z.B. soll die Offenbarung eines Mittels zur Durchführung eines Verfahrensschritts auch als Offenbarung des entsprechenden Verfahrensschritts und einer entsprechenden Programmanweisung verstanden werden.

Gemäß einem weiteren Ausführungsbeispiel umfasst das erfindungsgemäße Verfahren ferner, dass das Datenpaket auf der ersten Datenverarbeitungseinrichtung komprimiert werden kann. Mit anderen Worten kann die Größe des Datenpakets für eine einfachere und schnellere Übertragung reduziert werden. Das Datenpaket kann grundsätzlich zu beliebigen Stadien vor einer Übertragung komprimiert, also gepackt, werden. Bevorzugt kann das Zusammenfügen, Verschlüsseln und Komprimieren der Komponenten des Datenpakets jedoch in einem dedizierten Verfahrensschritt durchgeführt werden.

Darüber hinaus ist es grundsätzlich möglich, weitere Komponenten in das Datenpaket einzufügen. Gemäß einem weiteren Ausführungsbeispiel kann das Datenpaket zusätzlich zumindest eine Konfigurationsdatei umfassen, wobei die Konfigurationsdatei die Konfiguration des Netzzugriffprogramms beim Ausführen des Netzzugriffprogramms vorgeben kann. Beispielsweise kann durch die Konfiguration das Öffnen einer Internetseite des Dienstanbieters automatisch beim Start eines als Web-Browser ausgebildeten Netzzugriffprogramms erfolgen. Ebenfalls können sich innerhalb dieser Konfigurationsdatei Einstellungen befinden, um die Authentizität der aufgerufenen Internet Seite zu verifizieren.

Um zu verhindern, dass keine unverschlüsselten Dateien als Zwischenergebnis während des Entschlüsselungs- und ggfs. Dekomprimierungsschritts sichtbar sind, kann gemäß einem Ausführungsbeispiel der Erfindung das erfindungsgemäße Verfahren ferner umfassen, dass das Datenpaket in einem flüchtigen Speicher der weiteren Datenverarbeitungseinrichtung entschlüsselt werden kann. Bei dem flüchtigen Speicher kann es sich um einen Arbeitspeicher, wie einem RAM-Speicher handeln. Es versteht sich, dass auch eine evtl. Dekomprimierung des Datenpakets in dem Arbeitsspeicher durchgeführt werden kann.

Damit auch während der Ausführung des Netzzugriffprogramms keine Zwischenergebnisse sichtbar werden, kann alternativ oder zusätzlich zu einer Entschlüsselung in einem Arbeitsspeicher gemäß einem weiteren Ausführungsbeispiel vorgesehen sein, dass das Ausführen des Netzzugriffprogramms unmittelbar (und beispielsweise ausschließlich) aus dem flüchtigen Speicher der weiteren Datenverarbeitungseinrichtung erfolgen kann. Eine Installation des Browsers kann dann beispielsweise nicht erforderlich sein. Hierdurch kann ein potentieller Angriff weiter erschwert werden.

Zum Beispiel kann das Netzzugriffprogramm und/oder das Authentifizierungsmerkmal unmittelbar in einen Bereich eines Arbeitsspeicher der weiteren Datenverarbeitungsanlage entschlüsselt und aus dem Arbeitsspeicher ausgeführt werden derart, dass das entschlüsselte Netzzugriffprogramm, das entschlüsselte Authentifizierungsmerkmal und/oder Zwischenergebnisse während der Ausführung des Netzzugriffprogramms nur in dem Arbeitsspeicher abgespeichert sind.

Nach dem Beenden des Netzzugriffprogramms kann der Bereich des Arbeitsspeichers beispielsweise freigegeben und von anderen Anwendungen überschrieben werden. Alternativ kann der Bereich des Arbeitsspeichers beim Beenden des Netzzugriffprogramms durch Nullwerte oder durch zufällige Werte überschrieben werden, um Restinformationen im Arbeitsspeicher, insbesondere das entschlüsselte Authentifizierungsmerkmal sicher zu löschen. Ansonsten könnte eine andere Anwendung, die danach auf den gleichen Bereich des Arbeitsspeichers zugreift, diese Informationen erlangen. Es ist auch denkbar, dass der Bereich des Arbeitsspeichers vor der Freigabe verschlüsselt wird, um eine besonders hohe Sicherheit zu gewährleisten. Die Freigabe kann aber auch ohne eine Verschlüsselung des Bereichs des Arbeitsspeichers erfolgen. Der Arbeitsspeicher ist vorzugsweise ein physikalischer Arbeitsspeicher, beispielsweise ein flüchtiger Speicher, beispielsweise ein Speicher mit wahlfreiem Zugriff. Der Arbeitsspeicher kann ein Hauptspeicher, beispielsweise ein Cache-Speicher sein.

Eine (Zwischen-)Speicherung des entschlüsselten Netzzugriffprogramms, des entschlüsselten Authentifizierungsmerkmals und/oder der Zwischenergebnisse in einem Programmspeicher wie einer Festplatte findet in diesem Beispiel nicht statt. Dadurch wird das Ausspähen des entschlüsselten Netzzugriffprogramms, des entschlüsselten Authentifizierungsmerkmals und/oder der Zwischenergebnisse während der Ausführung des Netzzugriffprogramms auf der weiteren Datenverarbeitungsanlage zumindest erschwert.

Um die Sicherheit weiter zu verbessern kann gemäß einem weiteren erfindungsgemäßen Ausführungsbeispiel vorgesehen sein, dass beim Ausführen des Netzzugriffprogramms der Zustand des ausgeführten Netzzugriffprogramms überwacht werden kann. Beispielsweise kann die Härtungsfunktion des Netzzugriffprogramms derart konfiguriert sein, dass während der gesamten Laufzeit des Netzzugriffprogramms dessen Zustand überwacht werden kann. So kann insbesondere überwacht werden, ob ein anderer Prozess versucht, sich in den Prozessraum des Netzzugriffprogramms einzuklinken, z.B. per Debugger, Remote Threads oder Hooking, um dessen Verhalten zu manipulieren, die Härtungsfunktion zu deaktivieren oder das Benutzer-individuelle Authentifizierungsmerkmal bzw. den personenbezogenen Schlüssel auszulesen. Ferner können bei einer Detektion eines Angriffs geeignete Gegenmaßnahmen eingeleitet werden und zumindest der Angriff dem Benutzer und/oder dem Dienstanbieter angezeigt sowie die Transaktion abgebrochen werden. Ein weiterer Zugriff mittels des individuellen Netzzugriffprogramms kann gesperrt werden und eine Erzeugung und Übertragung eines neuen Datenpakets erforderlich sein.

Alternativ oder zusätzlich kann das Härten des Netzzugriffprogramms beispielsweise auch den Einsatz von sogenannten Code-Obfuscication Methoden umfassen. Zum Beispiel wird der Quellcode des Netzzugriffprogramms derart verschleiert, dass während der Laufzeit des Netzzugriffprogramms ein Rückschluss auf die Programmstruktur und/oder die internen Zustände des Netzzugriffprogramms wie Zwischenergebnisse verhindert wird. Insbesondere sind Code-Obfuscication Methoden geeignet, um ein sogenanntes Reverse-Engineering des Netzzugriffprogramms (z.B. während der Laufzeit) zu verhindern.

Des Weiteren ist gemäß einem anderen Ausführungsbeispiel der Erfindung vorgesehen, dass das Datenpaket und der zugehörige personenbezogene Schlüssel getrennt übertragen werden. Eine getrennte Übertragung dieser Komponenten ist zumindest dann gewährleistet, wenn die Komponenten über unterschiedliche Kommunikationswege und/oder unterschiedlichen Zeiten übertragen werden. Gemäß einem erfindungsgemäßen Ausführungsbeispiel kann der personenbezogene Schlüssel per SMS, E-Mail, Einschreiben oder Kurier übertragen werden und das Datenpaket per Download oder als Datenträger (z.B. CD-ROM oder USB-Stick) übertragen werden. Der Datenträger kann beispielsweise auch über dem Postweg übertragen werden. In diesem Fall kann dann der Schlüssel zumindest in einem anderen Poststück, bevorzugt zeitlich verschoben und insbesondere über einen anderen Kommunikationsweg übertragen werden. Die Ausspähung der sicherheitsrelevanten Daten wird hierdurch weiter erschwert.

Ferner ist erkannt worden, dass die Sicherheit weiter erhöht werden kann, insbesondere wenn eine Vielzahl an Benutzern einen angebotenen Dienst nutzen wollen, wenn gemäß einem weiteren Ausführungsbeispiel das Netzzugriffprogramm zumindest teilweise personenbezogen geändert wird. Beispielsweise kann die Härtungsfunktion des Netzzugriffprogramms besonders sicherheitssensible Teile des Netzzugriffprogramms personenbezogen verändern. Im Falle eines erfolgreichen Angriffs kann ein Angreifer nur ein einziges Netzzugriffprogramm aushebeln, nicht jedoch die individuell veränderten Netzzugriffprogramme der anderen Benutzer. Eine Übertragung des Angriffs auf andere Benutzer und somit eine massenhafte Ausnutzung des Angriffs kann verhindert werden.

Um eine Authentifizierung bei einem Dienstanbieter zu ermöglichen, kann gemäß einem weiteren Ausführungsbeispiel der Erfindung vorgesehen sein, dass das personenbezogene Authentifizierungsmerkmal des Datenpakets und der zum Datenpaket gehörende personenbezogene Schlüssel zu einem Benutzer zugeordnet werden kann, und diese Zuordnung in einer Datenbank der ersten Datenverarbeitungseinrichtung gespeichert werden kann. Als Datenbank kann grundsätzlich jedes geeignete Speichermedium eingesetzt werden. Auch versteht es sich, dass die Datenbank nicht in der Datenverarbeitungseinrichtung selber angeordnet sein muss, sondern es ist lediglich erforderlich, dass die Datenverarbeitungseinrichtung auf die Datenbank zugreifen kann. So kann beispielsweise die erste Datenverarbeitungseinrichtung als ein Dienstanbietungsserver und die Datenbank als ein Datenbankserver ausgestaltet sein.

Für eine Authentifizierung kann gemäß einem weiteren Ausführungsbeispiel der Erfindung das Authentifizieren des Benutzers der weiteren Datenverarbeitungseinrichtung gegenüber der ersten Datenverarbeitungseinrichtung mittels des personenbezogenen Authentifizierungsmerkmals derart durchgeführt werden, dass ein sicherheitsrelevanter Dienst von dem Benutzer ausschließlich bei einer positiven Authentifizierung ausführbar ist. Falls die Authentifizierung misslingt, beispielsweise weil in der Datenbank kein entsprechendes Authentifizierungsmerkmal für diesen Benutzer hinterlegt ist, kann eine Ausführung des sicherheitsrelevanten Dienstes untersagt werden.

Das erfindungsgemäße Verfahren, die erfindungsgemäße Datenverarbeitungseinrichtung und das erfindungsgemäße System können bevorzugt bei sicherheitsrelevanten Online Anwendungen, wie beispielsweise im Online Banking oder beim Online Payment, eingesetzt werden. Diese Anwendungen können von einer Vielzahl von Benutzern in Anspruch genommen werden, wobei jeder Benutzer ein jeweils individuell an den Benutzer angepasstes, also einmaliges Datenpaket erhält.

Ausführungsbeispiele der vorliegenden Erfindung betreffen u.a. die nachfolgend beschriebene Problematik. Die Sicherheit in sicherheitskritischen Webanwendungen kann dadurch gesteigert werden, dass sogenannte Sicherheitstoken verwendet werden. Solche Token haben zwei wichtige Eigenschaften:
- S1: Sie schützen sicherheitskritische Anwendungen (Online-Banking, Online-Payment, etc.) vor einem Missbrauch durch unautorisierte Benutzer. Sie enthalten als geheimes Authentifizierungsmerkmal einen geheimen Schlüssel. Dieses Geheimnis kann benutzt werden, um den Besitzer des Token gegenüber einer sicherheitskritischen Anwendung zu authentisieren. Dieses Geheimnis ist dadurch geschützt, dass es in einem unzugänglichen Bereich des Token abgelegt ist.
- S2: Sie schützen die Benutzer von sicherheitskritischen Anwendungen vor Angriffen von Hackern. Sie enthalten einen gehärteten Browser, der es verhindert, dass ein Angreifer den Browser manipulieren kann.

Ausführungsbeispielen der Erfindung liegt u.a. die Erkenntnis zugrunde, dass derselbe Schutz durch eine reine Softwarelösung erreichbar ist, indem der Anbieter des sicherheitskritischen Dienstes jeden Benutzer beispielsweise eine individuelle Software bereitstellt, die die obigen Sicherheitsfunktionen übernimmt. Diese Software hat folgende Eigenschaften:
- E1: Sie umfasst oder besteht aus einem Browser, der fest mit einem Authentifizierungsmerkmal verbunden ist. Dieses Authentifizierungsmerkmal ist bevorzugt weder auslesbar noch veränderbar.
- E2: Der Browser ist gehärtet und für jeden Benutzer individualisiert.

Die Eigenschaft E1 garantiert beispielsweise Sicherheitseigenschaft S1. Eigenschaft E2 garantiert beispielsweise Sicherheitseigenschaft S2. Das Härten reduziert den Browser auf das Wesentliche und reduziert so die Angriffsmöglichkeiten. Das Härten ergänzt zusätzliche Sicherheitsfunktionen, die bekannte Angriffe wie Code-Injection verhindern. Das Individualisieren verhindert, dass Angriffe gegen eine große Zahl von Benutzern möglich sind. Denn die Angriffe müssen nämlich auch individualisiert werden.

Die Eigenschaft E1 wird zum Beispiel dadurch erreicht, dass vor der Auslieferung der Software diese mit dem Authentifizierungsmerkmal verbunden wird und die so entstehende Software individuell für jeden Benutzer verschlüsselt wird. Die Eigenschaft E2 wird zum Beispiel erreicht, indem die üblichen Härtungsmaßnehmen ergriffen werden und eine Codeindividualisierung vorgenommen wird. Die Sicherheit kann durch zusätzliche Maßnahmen unterstützt werden. Der gehärtete Browser kann zum Beispiel für jede Anwendung individuell entschlüsselt werden und zwar im Hauptspeicher des Client-Rechners.

Der Schutz des Authentifizierungsmerkmal kann zum einen durch den Aktivierungscode oder das Passwort des Benutzers, das er auf einem separaten Kanal erhalten hat, geleistet werden und zum anderen auch durch die verschiedenen Härtungsmechanismen, die einen Angriff auf den Speicher des Browser Prozesses zur Laufzeit verhinden sollen. Code Obfuscation und die anderen Härtungsmechanismen sorgen beispielswiese dafür, dass der Browserprozess zur Laufzeit (also beispielsweise im Speicher, z.B. dem Arbeitspeicher) geschützt wird. Die Verschlüsselung des ganzen Datenpakets, d.h. des Browsers und des Authentifizierungsmerkmals sorgt zum Beispiel dafür, dass der Browser auch auf der Fesplatte (z.B. gegen Diebstahl) geschützt ist und der Angreifer nichts damit anfangen kann (er braucht noch den Aktivierungscode).

Beispielsweise liegt das Authentifizierungsmerkmal somit fast immer nur verschlüsselt vor und wird nur zur Laufzeit entschlüsselt und das nur im Arbeitsspeicher und zwar in einem gehärteten Browser. Dadurch wird die Möglichkeit, das Authentifizierungsmerkmal zu entwenden, stark reduziert.

Die in dieser Spezifikation beschriebenen beispielhaften Ausgestaltungen der vorliegenden Erfindung sollen auch in allen Kombinationen miteinander offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen.

Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Zeichnungen

In den Figuren zeigen
- Fig. 1: ein erstes Ablaufdiagramm mit Verfahrensschritten einer beispielhaften Ausführungsform der Erfindung;
- Fig. 2: ein Blockdiagramm einer beispielhaften Ausführungsform eines Systems mit einer beispielhaften Ausführungsform einer Datenverarbeitungseinrichtung; und
- Fig. 3: ein zweites Ablaufdiagramm mit Verfahrensschritten einer beispielhaften Ausführungsform der Erfindung.

### Detaillierte Beschreibung einiger beispielhafter Ausführungsformen der vorliegenden Erfindung

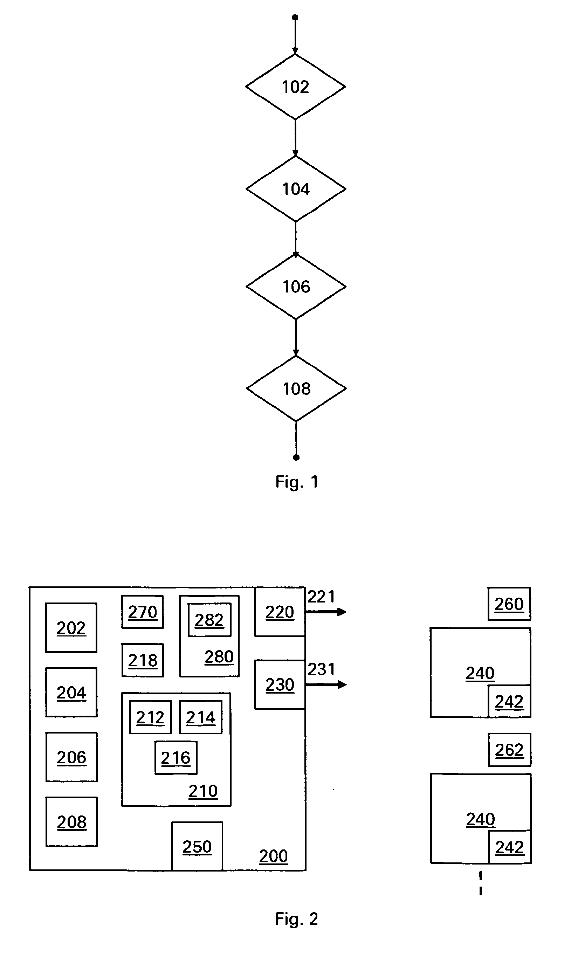

Figur 1 zeigt ein erstes Ablaufdiagramm mit Verfahrensschritten einer beispielhaften Ausführungsform der Erfindung.

In einem ersten Schritt 102 wird ein Datenpaket in einer ersten Datenverarbeitungseinrichtung erzeugt. Die erste Datenverarbeitungseinrichtung kann ein Computer sein, insbesondere eine Server-Komponente.

Das Datenpaket, welches in dem ersten Schritt 102 erzeugt wird, umfasst zumindest ein gehärtetes Netzzugriffprogramm und ein personenbezogenes Authentifizierungsmerkmal. Ein gehärtetes Netzzugriffprogramm ist insbesondere ein Web-Browser, welcher eine Härtungsfunktion umfasst. Andere Netzzugriffprogramme, wie ein Online-Banking-Programm, insbesondere ein Clientprogramm, mit Härtungsfunktion sind auch denkbar.

Im vorliegenden Ausführungsbeispiel wird jedoch von einem gehärteten Web-Browser ausgegangen. Dieser Web-Browser umfasst ausschließlich Funktionen, die zur Ausführung der gewünschten sicherheitsrelevanten Dienste erforderlich sind. Hierdurch kann die Gefahr einer Manipulation des Web-Browsers deutlich reduziert werden. Insbesondere lassen sich Angriffe nicht durch andere Prozesse, die bei herkömmlichen Browsern ständig im Hintergrund laufen, verstecken, so dass ein Angriff leichter erkannt wird und entsprechende Gegenmaßnahmen eingeleitet werden können. Ferner kann die Härtungsfunktion Anti-Reverse Engineering, Anti-Debugging und Anti-Code Injektions-Mechanismen umfassen.

Der Web-Browser wird mit einem personenbezogenen Authentifizierungsmerkmal, also einem individuellen und einmaligen Merkmal, welches nur einem einzigen Benutzer zugeordnet ist, verknüpft. Insbesondere kann das personenbezogene Authentifizierungsmerkmal fest mit dem Netzzugriffprogramm verbunden werden. Hierdurch wird ein individuelles Datenpaket für jeden Benutzer erzeugt.

Zusätzlich kann der Web-Browser derart konfiguriert sein, dass besonders sicherheitssensible Teile des Web-Browsers personenbezogen geändert sind bzw. von dem Web-Browser selbst durch die Härtungsfunktion individuell verändert werden. Diese Maßnahme erhöht insbesondere die Sicherheit weiterer Web-Browser von anderen Benutzern. Ein Angreifer kann selbst im Falle eines erfolgreichen Angriffs nur eine einzige Instanz aushebeln, aber keinesfalls die Instanzen anderer Benutzer. Eine Übertragung des Angriffs auf andere Benutzer und somit eine massenhafte Ausnutzung des Angriffs kann ausgeschlossen werden.

Ein Authentifizierungsmerkmal, insbesondere in Form von Software, kann beispielsweise ein Passwort, Softwarezertifikate, wie Public Key Cryptography Standards (PKCS), OpenSSL und dergleichen sein. Es versteht sich, dass auch mehrere Authentifizierungsmerkmale in Kombination eingesetzt werden können, um die Sicherheit zu erhöhen.

In einem nächsten Verfahrensschritt 104 wird das erzeugte Datenpaket verschlüsselt. Die Verschlüsselung erfolgt mit einem personenbezogenen Schlüssel, also einem individuellen und einmaligen Schlüssel, welcher nur einem einzigen Benutzer zugeordnet ist. Geeignete Verschlüsselungsmethoden, wie Code Obfuscation, kryptographische Verschlüsselungen, z.B. Advanced Encryption Standard (AES), und dergleichen sind bekannt. Beispielsweise kann bei einer symmetrischen Verschlüsselung mit AES einem Benutzer der Schlüssel auf einem separaten Kanal zum "Auspacken" des Datenpakets zur Verfügung gestellt werden, so dass auch nur er/sie dieses benutzen kann.

Nach der Verschlüsselung kann das Datenpaket an eine weitere Datenverarbeitungseinrichtung, wie einem Computer, Laptop, Smartphone, und dergleichen, übertragen werden (Schritt 106). Auch ist es möglich, dem Benutzer der Datenverarbeitungseinrichtung das Datenpaket auf einem Datenträger zur Verfügung zu stellen. Gleichzeitig kann dem Benutzer der weiteren Datenverarbeitungseinrichtung, der einen sicherheitsrelevanten Dienst, wie Online Banking, in Anspruch nehmen will, der diesem Benutzer zugeordnete Schlüssel zur Verfügung gestellt werden. Vorzugsweise wird dem Benutzer der Schlüssel auf einem anderen Kommunikationsweg oder zumindest mit einer zeitlichen Verschiebung zur Verfügung gestellt.

Mittels des personenbezogenen Schlüssels kann der Benutzer dann das Datenpaket entschlüsseln und insbesondere das Netzzugriffprogramm ausführen. Dann kann der Benutzer die gewünschten sicherheitsrelevanten Dienste mit dem Web-Browser durchführen. Eine detailliertere Beschreibung des Verfahrens erfolgt untenstehend.

Die Figur 2 zeigt ein Blockdiagramm einer beispielhaften Ausführungsform eines Systems mit einer beispielhaften Ausführungsform einer ersten Datenverarbeitungseinrichtung 200. Wie oben bereits beschrieben, kann die Datenverarbeitungseinrichtung 200 ein Server oder eine Serverkomponente sein. Diese Datenverarbeitungseinrichtung kann von dem Anbieter der sicherheitsrelevanten Dienste bereitgestellt werden. Beispielsweise kann eine Bank einen entsprechenden Server zur Ausführung von Online Banking zur Verfügung stellen.

Die erste Datenverarbeitungseinrichtung 200 kann einen als Mikroprozessor, Mikrokontrolleinheit wie Mikrocontroller, digitaler Signalprozessor (DSP), Anwendungsspezifische Integrierte Schaltung (ASIC) oder Field Programmable Gate Array (FPGA) ausgebildeten Prozessor 270 umfassen.

Dieser Prozessor kann z.B. Programmanweisungen ausführen, die in Programmspeicher gespeichert sind, und speichert beispielsweise Zwischenergebnisse oder ähnliches in Hauptspeicher. Zum Beispiel ist Programmspeicher ein Nur-Lese-Speicher (ROM) und Hauptspeicher st ein flüchtiger- oder nicht-flüchtiger-Speicher, insbesondere ein Speicher mit wahlfreiem-Zugriff (RAM) und/oder ein Flash-Speicher.

Ferner kann die Datenverarbeitungseinrichtung 200 eine Datenträgervorrichtung 280 umfassen, die beispielsweise ein computerlesbares Speichermedium sein kann, welches ein erfindungsgemäßes Computerprogramm 282 enthält, das durch den Prozessor 270 ausgeführt werden kann

Die beispielhafte erste Datenverarbeitungseinrichtung 200 umfasst darüber hinaus einen Authentifizierungsgenerator 202, einen Datenpaketgenerator 204, einen Schlüsselgenerator 206 und einen Verschlüsselungsgenerator 208.

Der Authentifizierungsgenerator 202 ist konfiguriert, um das zumindest eine personenbezogene Authentifizierungsmerkmal 212 zu generieren. Der Datenpaketgenerator 204 erzeugt das Datenpaket 210, indem die einzelnen Komponenten 212, 214 und 216 des Datenpakets 210 zusammengefügt werden.

Der Schlüsselgenerator 206 erzeugt den personenbezogenen Schlüssel 218. Dieser Schlüssel 218 wird vom Verschlüsselungsgenerator 208 verwendet, um das Datenpaket 210 zu verschlüsseln. Der Verschlüsselungsgenerator 208 kann ferner ein Komprimierungsmodul aufweisen, um dass Datenpaket 210 zu komprimieren. Es versteht sich, dass das Komprimierungsmodul gemäß anderen Varianten der Erfindung auch als separates Modul der ersten Datenverarbeitungseinrichtung 200 gebildet sein kann.

Darüber hinaus kann der Figur 2 entnommen werden, dass die erste Datenverarbeitungseinrichtung 200 zwei Übertragungsmodule 220 und 230 aufweisen kann. Das Übertragungsmodul 220 kann insbesondere ein Schlüsselübertragungsmodul 220 sein, um den personenbezogenen Schlüssel 218 an den zugehörigen Benutzer 260, 262 über einen vorgebbaren Kommunikationsweg 221 zu übertragen.

Das weitere Übertragungsmodul 230 kann bevorzugt ein Datenpaketübertragungsmodul 230 sein, um das individualisierte Datenpaket 210 an den zugehörigen Benutzer 260, 262 bzw. dessen weitere Datenverarbeitungseinrichtung 240 über einen weiteren vorgebbaren Kommunikationsweg 231 zu übertragen.

Ferner umfasst die erste Datenverarbeitungseinrichtung 200 eine Speichereinrichtung 250 in Form einer Datenbank 250. In der Datenbank 250 können beispielsweise Daten zur Authentifizierung zentral abgespeichert werden. So können beispielweise die personenbezogenen Authentifizierungsmerkmale 212 mit den zugehörigen Benutzerdaten, wie Name, Adresse, etc., abgelegt werden. Zusätzlich können die personenbezogenen Schlüssel 218 abgespeichert werden. Es versteht sich, dass die Datenbank 250 nicht unmittelbar in der ersten Datenverarbeitungseinrichtung 200 angeordnet sein muss, sondern auch entfernt angeordnet sein kann, solange die erste Datenverarbeitungseinrichtung 200 auf die Datenbank 250 zugreifen kann.

Wie bereits erwähnt können als weitere Datenverarbeitungseinrichtungen 240 Computer, Laptops, Smartphones und dergleichen eingesetzt werden. Diese Geräte 240 können einen flüchtigen Speicher 242, wie beispielsweise einen Arbeitsspeicher 242, aufweisen.

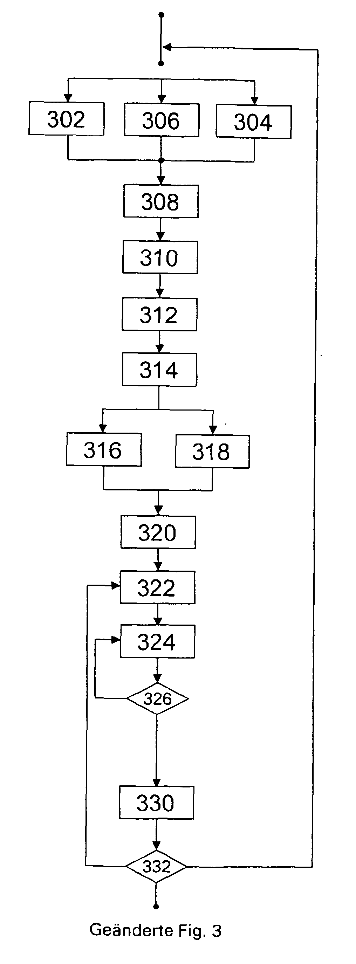

Die Funktion des in Figur 2 dargestellten Systems wird nachfolgend mit Hilfe der Figur 3 näher erläutert.

Die Figur 3 zeigt ein zweites Ablaufdiagramm mit Verfahrensschritten einer beispielhaften Ausführungsform der Erfindung.

In einem ersten Schritt 302 kann der Authentifizierungsgenerator 202 ein personenbezogenes Authentifizierungsmerkmal 212 generieren, welches einem einzigen Benutzer 260, 262 zugeordnet ist. Beispielsweise wird ein Passwort oder ein geeignetes Zertifikat generiert, welches einmalig ist.

Ferner wird gemäß der vorliegenden Ausführungsform ein gehärtetes Netzzugriffprogramm 214, welches speziell für den gewünschten sicherheitsrelevanten Dienst konfiguriert ist, zur Verfügung gestellt (Schritt 304).

In einem weiteren Schritt 306 kann eine Konfiguration 216, beispielsweise in Form einer Konfigurationsdatei 216, bereitgestellt werden. Die Konfigurationsdatei 216 kann die Konfiguration des Netzzugriffprogramms 214 beim Ausführen des Netzzugriffprogramms 214 vorgeben. Die Konfigurationsdatei 216 wird nachfolgend näher erläutert.

Wie der Figur 3 zu entnehmen ist, können die Verfahrensschritte 302, 304, 306 bevorzugt parallel ausgeführt werden. Es versteht sich jedoch, dass gemäß anderen Varianten der Erfindung auch ein serieller Ablauf dieser Schritte möglich ist.

Nach dem die Komponenten 212, 214 und 216 erzeugt bzw. zur Verfügung gestellt wurden, kann in einem nächsten Schritt 308 das Datenpaket 210 durch den Datenpaketgenerator 204 erzeugt werden. So können die einzelnen Komponenten 212, 214 und 216 zusammengefügt und insbesondere fest miteinander verbunden werden, um eine spätere Trennung zu verhindern. Hierdurch wird die Gefahr von Manipulationen des Netzzugriffprogramms 214 weiter verringert. Es wird insbesondere ein personenbezogenes Datenpaket 210 erzeugt, welches ausschließlich einem Benutzer 260, 262 zugeordnet ist.

Dann kann der Schlüsselgenerator 206 in einem nächsten Schritt 310 einen personenbezogenen Schlüssel 218 erzeugen. Der dem Benutzer 260, 262 zugeordnete Schlüssel 218 kann ein Aktivierungscode oder Passwort sein. Es versteht sich, dass der Schlüssel 218 auch schon parallel zu einem der vorherigen Verfahrensschritte 302 bis 308 erzeugt werden kann.

Bevorzugt kann das Datenpaket 210 in dem nächsten Schritt 312 komprimiert und mit dem zuvor erzeugten personenbezogenen Schlüssel 218 durch den Verschlüsselungsgenerator 208 verschlüsselt werden. Komprimieren und Verschlüsseln kann gemäß anderen Varianten der Erfindung auch seriell erfolgen. Darüber hinaus können die Schritte Zusammenfügen, Verschlüsseln und Komprimieren zusammen durch einen entsprechenden Generator durchgeführt werden. Beispielsweise ist es möglich mit einem ZIP-Datei-Generator eine ZIP-Datei zu erzeugen.

Es ist aber auch denkbar, dass das Datenpaket in Schritt 312 lediglich verschlüsselt wird und eine Komprimierung des Datenpakets nicht stattfindet.

Die Verschlüsselung mit dem personenbezogenen Schlüssel 218 bewirkt, dass eine Entschlüsselung des Datenpakets 210 nur mit Hilfe des Schlüssels 218 möglich ist, welcher bevorzugt einmalig ist. In einem weiteren Schritt 314 können das dem Benutzer 260, 262 zugeordnete Authentifizierungsmerkmal 212, die Daten des Benutzers 260, 262 und/oder der personenbezogene Schlüssel 218 abgespeichert und vorzugsweise in einer Datenbank 250 hinterlegt werden. Es versteht sich auch hier, dass die Abspeicherung der Daten grundsätzliche zu beliebigen Zeitpunkten, insbesondere unmittelbar nach Erzeugung der Daten, erfolgen kann.

Der erzeugte personenbezogene Schlüssel 218 und das erzeugte personenbezogene Datenpaket 210 können dann an den entsprechenden Benutzer 260, 262 bzw. dessen weitere Datenverarbeitungseinrichtung 240 übertragen werden (Schritte 316 und 318). Die beiden Komponenten 210 und 218 können sowohl zeitgleich als auch nacheinander übertragen. Bevorzugt wird das Datenpaket 210 über einen anderen Kommunikationsweg 231 als der Schlüssel 218 übertragen. Beispielsweise kann das Datenpaket 210 von dem Übertragungsmodul 230 für einen Download zur Verfügung gestellt werden oder das Datenpaket 210 kann auf einem Datenträger, wie eine DVD, CD oder dergleichen, abgespeichert und an den Benutzer 260, 262 übertragen werden. Der personenbezogene Schlüssel 218 kann hingegen per E-Mail, SMS, Post oder dergleichen übertragen werden. Durch die getrennten Kommunikationswege 221, 231 wird es einem potentiellen Angreifer signifikant erschwert, die sicherheitsrelevanten Daten auszukundschaften.

In einem nächsten Schritt 320 empfängt der Benutzer 260, 262 unmittelbar oder mittelbar über seine/ihre weitere Datenverarbeitungseinrichtung 240 das Datenpaket 210 und den Schlüssel 218. Es versteht sich, dass der tatsächlich Empfangszeitpunkt der beiden Komponenten 210, 218 auseinander fallen kann.

In einem nächsten Schritt 322 startet der Benutzer 260, 262 das Datenpaket 210 und wird gemäß dem vorliegenden Ausführungsbeispiel im Schritt 324 zur Eingabe des personenbezogenen Schlüssels 218 aufgefordert. Die Eingabe kann über geeignete Schnittstellengeräte, wie eine Tastatur, ein Touchscreen oder dergleichen, erfolgen.

Wenn der personenbezogene Schlüssel 218 zum verschlüsselten Datenpaket 210 korrespondiert, dann kann im nächsten Schritt 326 das Datenpaket 210 entschlüsselt und gegebenenfalls dekomprimiert werden. Ansonsten kann eine Fehlermeldung erfolgen und der Benutzer 260, 262 kann zur erneuten Eingabe des personenbezogenen Schlüssels 218 aufgefordert werden.

Die Entschlüsselung und Dekomprimierung kann bevorzugt gleichzeitig durchgeführt werden. Insbesondere kann dieser Entpack- und Entschlüsselungsvorgang direkt in dem Arbeitsspeicher 242 des ausführenden Rechners 240 ausgeführt werden. In diesem Fall sind keine unverschlüsselten Dateien als Zwischenergebnis sichtbar. Eine Manipulation des gehärteten Web-Browsers 214 wird weiter erschwert.

Nachdem das Datenpaket 210 dekomprimiert und entschlüsselt ist, kann das gehärtete Web-Browser 214 vorzugsweise ohne Installation ausgeführt werden (Schritt 326). Hierbei kann der Web-Browser 214 Zugriff auf das personenbezogene Authentifizierungsmerkmal 212 haben.

Alternativ ist auch denkbar, zum Beispiel wenn das Datenpaket 210 in Schritt 312 nicht komprimiert wurde, dass in Schritt 326 lediglich eine Entschlüsselung des Datenpakets 210 stattfindet. Bevorzugt wird das Datenpaket 210 dabei direkt in den Arbeitsspeicher 242 des Rechners 240 entschlüsselt und der gehärtete Web-Browser 214 unmittelbar aus dem Arbeitsspeicher 242 des Rechners 240 ausgeführt.

Dann kann der Benutzer 260, 262 entweder selbst eine Internet Seite in dem Web-Browser 214 öffnen, oder diese kann automatisch beim Start des Web-Browsers 214 durch dessen Konfigurationsdatei 216 geöffnet werden (Schritt 326). Ebenfalls innerhalb der Konfigurationsdatei 216 des Web-Browsers 214 können sich entsprechende Einstellungen befinden, um die Authentizität der aufgerufenen Internet Seite zu verifizieren, z.B. in Form von SSL Zertifikaten.

In einem nächsten Schritt 330 kann der Benutzer 260, 262 mittels des personenbezogenen Authentifizierungsmerkmals 212 gegenüber der Internet Seite, die beispielsweise von der ersten Datenverarbeitungseinrichtung 200 zur Verfügung gestellt wird, authentisiert werden. Hierbei kann ein Abgleich des Authentifizierungsmerkmals 212 mit den in der Datenbank 250 abgelegten Daten durchgeführt werden. Dabei kann der Benutzer 260, 262 optional zur nochmaligen Eingabe seines personenbezogenen Schlüssels 218 oder eines weiteren personenbezogenen Schlüssels aufgefordert werden, um das personenbezogenen Authentifizierungsmerkmals 212 zu entschlüsseln. Nach einem positiven Authentifizierungsergebnis kann der Benutzer 260, 262 den gewünschten sicherheitsrelevanten Dienst, wie beispielsweise eine Überweisung oder dergleichen, mit dem einzig für diesen Zweck konzipierten Netzzugriffprogramm durchführen. Sollte die Authentifizierung zu einem negativen Ergebnis führen, so wird eine Ausführung des Netzzugriffprogramms 214 und insbesondere eine Ausführung des sicherheitsrelevanten Dienstes verhindert.

Während der gesamten Laufzeit des Netzzugriffprogramms 214 kann die Härtungsfunktion des Netzzugriffprogramms 214 dessen Zustand überwachen. Dabei kann insbesondere überwacht werden, dass kein anderer Prozess versucht, sich in den Prozessraum des Netzzugriffprogramms 214 einzuklinken (z.B. per Debugger, Remote Threads oder Hooking), um dessen Verhalten zu manipulieren, die Härtungsfunktion zu deaktivieren oder das personenbezogene Authentifizierungsmerkmal 212 bzw. den personenbezogenen Schlüssel 218 auszulesen. Ferner kann der Web-Browser 214 vor dem Ausführen bzw. Freischalten eines sicherheitsrelevanten Dienstes verschlüsselte Daten an die erste Datenverarbeitungseinrichtung 200 übermitteln. Diese Daten können beispielsweise den Zustand des Web-Browser 214, insbesondere den internen Zustand, einen Zeitstempel und Zufallsdaten umfassen. Durch Erfassung und Übermittlung des internen Browserzustand kann eine Code Injektion verhindert werden.

In einem letzten Schritt 332 kann nach der Durchführung des sicherheitsrelevanten Dienstes das Netzzugriffprogramm 214 beendet und insbesondere automatisch wieder komprimiert und verschlüsselt werden.

Möchte der Benutzer 260, 262 eine weitere sicherheitsrelevante Transaktion durchführen, so kann er/sie das Netzzugriffprogramm 214 erneut starten (Schritt 322).

Um weiteren Benutzern 262 ebenfalls ein personenbezogenes und verschlüsseltes Datenpaket 210 zur Verfügung zu stellen, kann das Verfahren mit den Schritten 302, 304 und 306 wieder neu gestartet werden.

Es kann vorgesehen sein, dass jedes Mal, wenn der Benutzer eine sichere Transaktion (z.B. Online Banking) ausführen möchte, er/sie die für ihn/ihr individuell gepackte Datei startet und beim Start seinen Benutzer-individuellen Schlüssel eingibt. Daraufhin kann der Web-Browser inklusive der Härtungsfunktion und dem Benutzer-individuellen Authentifizierungsmerkmal von der verschlüsselnden Pack-Funktion mit Hilfe des Benutzer-individuellen Schlüssels entschlüsselt und entpackt werden. Dieser Entpack- und Entschlüsselungsvorgang kann idealerweise direkt in den Arbeitsspeicher des ausführenden Rechners ausgeführt werden, so dass keine unverschlüsselten Dateien als Zwischenergebnis sichtbar sind. Der Web-Browser kann zusammen mit der Härtungsfunktion ausgeführt werden und hat Zugriff auf das Benutzer-individuelle Authentifizierungsmerkmal.

Ferner kann auch eine Server-Komponente vorgesehen sein, welche aus den Einzel-Komponenten Web-Browser und einer Packer-Funktion die Benutzer-individuelle Datei erstellt, in die mit Hilfe eines Authentifizierungsmerkmal-Generators das Benutzer-individuelle Authentifizierungsmerkmal mit eingebracht wird. Die genannten Komponenten können sodann mit Hilfe der Packer-Funktion in die Benutzer-individuelle Datei zusammengepackt und mit dem Benutzer-individuellen Schlüssel verschlüsselt werden. Der Benutzer-individuelle Schlüssel kann zuvor von dem Schlüsselgenerator erzeugt worden sein. Er kann dem Benutzer auf einem separaten Weg bereitgestellt werden, z.B. per SMS oder eingeschriebenem Brief.

Durch die Erfindung erhält der Benutzer einen individuellen gehärteten Web-Browser, der weniger Angriffsfläche bietet als die üblicherweise auf den Benutzer-Rechnern vorhandenen Web-Browser. Außerdem ist der gehärtete Web-Browser durch die Verschlüsselung eng mit einem Authentifizierungsmerkmal verbunden.

Im Gegensatz zum Stand der Technik kann erfindungsgemäß die 2-Faktor-Authiziefierung ohne Hardware als reine Software-Lösung realisiert werden. Hierzu kann personalisierte Software eingesetzt werden, die für jeden Benutzer individuell konfiguriert ist. So kann ein Benutzer zunächst von einem Dienstanbieter, wie einer Bank, einen Aktivierungscode per SMS oder E-Mail erhalten. Dann kann der Benutzer sich bei der Bank mit seinem Benutzernamen und einem Passwort einloggen und mittels des Aktivierungscode das personenbezogene Netzzugriffprogramm, insbesondere einen Browser, herunterladen. Das Netzzugriffprogramm kann mittels eines Obfuscators verschleiert und mit einem "Wasserzeichen" versehen werden. Der Benutzer kann nun diesen sicheren Browser für die Online-Dienste nutzen, wobei die Bank den Benutzer authentifiziert, wenn dieser sich wie zuvor beschrieben einloggt und der Browser das Wasserzeichen, also das Authentifizierungsmerkmal, an die Bank sendet.

Es kann beispielsweise ein einziges ausführbares Datenpaket gepackt werden, welches einen Browser mit Härtungsfunktion, wie Anti-Reverse Engineering, Anti-Debugging, Anti-Keylogger und Anti-Code Injektions-Mechanismen, umfasst, wobei dieses Paket für jeden Benutzer individualisiert sein kann. Ein Anti-Keylogger kann vorgesehen sein, um ein Abhören des Passworts oder des Aktivierungscodes des Benutzers von einem Angreifer zu verhindern. Der Browser kann durch einen einmaligen Aktivierungscode, wie ein Passwort, aktiviert werden, so dass zumindest Teile des Browsers entschlüsselt werden und der Browser ausführbar ist. Der Browser kann vor dem Ausführen bzw. Freischalten des Browsers verschlüsselte Daten an die erste Datenverarbeitungseinrichtung übermitteln. Diese Daten können beispielsweise den Zustand des Browser, insbesondere den internen Zustand, einen Zeitstempel und Zufallsdaten umfassen. Durch Erfassung und Übermittlung des internen Browserzustand kann eine Code Injektion verhindert werden.

Die Abfolge der einzelnen Verfahrenschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

Die in dieser Anmeldung beschriebenen beispielhaften detaillierten Ausführungsformen der vorliegenden Erfindung sollen auch in allen Kombinationen miteinander offenbart sein.

## Patentansprüche

1. Verfahren, umfassend:
- Erzeugen eines Datenpakets (210) umfassend zumindest ein gehärtetes Netzzugriffprogramm (214) und zumindest ein personenbezogenes Authentifizierungsmerkmal (212) in einer ersten Datenverarbei.tungseinrichtung (200), wobei das Datenpaket das zumindest eine personenbezogene Authentifizierungsmerkmal neben dem zumindest einen Netzzugriffprogramm umfasst, und wobei das Datenpaket (210) ein Datenpaket aus einer Vielzahl von für jeweilige Benutzer (260, 262) individuell angepassten Datenpaketen ist, die jeweils das Netzzugriffprogramm (214) und ein dem jeweiligen Benutzer zugeordnetes personenbezogenes Authentifizierungsmerkmal umfassen,
- Erzeugen eines personenbezogenen Schlüssels (218),
- Verschlüsseln des Datenpaktes (210) zur Bindung des personenbezogenen Authentifizierungsmerkmals (212) an das Netzzugriffprogramm (214), und
- Bereitstellen des Datenpakets (210) für eine Übertragung an eine weitere Datenverarbeitungseinrichtung (240), wobei das übertragene Datenpaket (210) mit dem von einem Benutzer eingegebenen personenbezogenen Schlüssel (218) auf der weiteren Datenverarbeitungseinrichtung (240) entschlüsselbar ist, derart, dass das Netzzugriffprogramm (214) ausführbar ist, dabei hat das Netzzugriffprogramm (214) Zugriff auf das personenbezogene Authentifizierungsmerkmal (212) und ist durch das personenbezogene Authentifizierungsmerkmal (212) authentifizierbar.

2. Verfahren nach Anspruch 1, wobei das Datenpaket einem einzigen Benutzer zugeordnet ist, und wobei das personenbezogene Authentifizierungsmerkmal der Prüfung dient, ob das Netzzugriffprogramm bzw. der Benutzer des Netzzugriffprogramms zur Ausführung eines sicherheitsrelevanten Dienstes berechtigt ist.

3. Verfahren nach einem der vorherigen Ansprüche, wobei das Netzzugriffprogramm (214) und das Authentifizierungsmerkmal (212) in einen Bereich eines Arbeitsspeicher (242) der Datenverarbeatungsanlage (240) entschlüsselbar und aus dem Arbeitsspeicher (242) ausführbar sind, derart, dass das entschlüsselte Netzzugriffprogramm und das entschlüsselte Authentifizierungsmerkmal während der Ausführung des Netzzugriffprogramms (214) nur in dem Arbeitsspeicher (242) abgespeichert sind und eine Speicherung des entschlüsselten Netzzugriffprogramms (214) und des entschlüsselten Authentifizierungsmerkmals (212) auf einer Festplatte der Datenverarbeitungseinrichtung (240) nicht stattfindet.

4. Verfahren nach einem der vorherigen Ansprüche, wobei das Datenpaket (210) zumindest eine Konfigurationsdatei (216) umfasst, und wobei die Konfigurationsdatei (216) die Konfiguration des Netzzugriffprogramms (214) beim Ausführen des Netzzugriffprogramms (214) vorgibt.

5. Verfahren nach einem der vorherigen Ansprüche, wobei das gehärtete Netzzugriffprogramm speziell für einen sicherheitsrelevanten Dienst konfiguriert ist.

6. Verfahren nach einem der vorherigen Ansprüche wobei das Datenpaket (210) und der zugehörige personenbezogene Schlüssel (218) getrennt übertragen werden.

7. Verfahren nach einem der vorherigen Ansprüche, wobei das Netzzugriffprogramm (214) zumindest teilweise personenbezogen geändert wird.

8. Verfahren nach einem der vorherigen Ansprüche, ferner umfassend:
- Zuordnen des personenbezogenen Authentifizierungsmerkmals (212) des Datenpakets (210) und des zum Datenpaket (210) gehörenden personenbezogenen Schlüssels (218) zu einem Benutzer (260, 262), und
- Speichern der Zuordnung in einer Datenbank (250) der ersten Datenverarbeitungseinrichtung (200).

9. Verfahren nach einem der vorherigen Ansprüche, ferner umfassend Authentifizieren eines Benutzers (260, 262) der weiteren Datenverarbeitungseinrichtung (240) gegenüber der ersten Datenverarbeitungseinrichtung (200) mittels des personenbezogenen Authentifizierungsmerkmals (212), derart, dass ein sicherheitsrelevanter Dienst von dem Benutzer (260, 262) ausschließlich bei einer positiven Authentifizierung ausführbar ist.

10. Verfahren nach einem der vorherigen Ansprüche, wobei das Authentifizierungsmerkmal ein Softwarezertifikat und/oder ein Passwort ist.

11. Verfahren nach einem der vorherigen Ansprüche, wobei das Datenpaket (210) ein ausführbares Datenpaket ist.

12. Verfahren nach einem der vorherigen Ansprüche, ferner umfassend
- Entschlüsseln des Datenpakets (210) in einen flüchtigen Speicher (242) der weiteren Datenverarbeitungseinrichtung (240), und/oder
- Ausführen des Netzzugriffprogramms (214) unmittelbar aus dem flüchtigen Speicher (242) der weiteren Datenverarbeitungseinrichtung (240).

13. Computerprogramm (282), umfassend Programmanweisungen, die einen Prozessor (270) zur Ausführung des Verfahrens gemäß einem der Ansprüche 1 bis 11 veranlassen, wenn das Computerprogramm (282) auf dem Prozessor (270) läuft.

14. Datenverarbeitungseinrichtung (200), umfassend
- Mittel zur Ausführung des Verfahrens gemäß einem der Ansprüche 1-11.

15. System, umfassend
- eine Datenverarbeitungseinrichtung (200) nach Anspruch 14, und
- zumindest die weitere Datenverarbeitungseinrichtung (240).

## Claims

1. A method comprising
- generating, in a first data processing device (200), a data packet (210) comprising at least one hardened network access program (214) and at least one person-related authentication feature (212), wherein the data packet comprises the at least one person-related authentication feature in addition to the at least one network access program, and wherein the data packet (210) is a data packet from a plurality of data packets individually adapted for respective users (260, 262), each of the data packets comprising the network access program (214) and a person-related authentication feature assigned to the respective user,
- generating a person-related key (218),
- encrypting the data packet (210) for linking the person-related authentication feature (212) with the network access program (214), and
- providing the data packet (210) for a transmission to a further data processing device (240), wherein the transmitted data packet (210) can be decrypted in the further data processing device (240) with the person-related key (218) input by a user such that the network access program (214) can be executed, the network access program 214) having access to the person-related authentication feature (212) and being able to be authenticated by the person-related authentication feature (212).

2. The method according to claim 1, wherein the data packet is assigned to a single user, and wherein the person-related authentication feature serves for checking whether the network access program or the user of the network access program is entitled to execute a safety-relevant service.

3. The method according to one of the previous claims, wherein the network access program (214) and the authentication feature (212) can be decrypted into an area of the working memory (242) of the data processing device (240) and can be executed from the working memory (242) such that during execution of the network access program (214), the decrypted network access program and the decrypted authentication feature are stored in the working memory (242) only and the decrypted network access program (214) and the decrypted authentication feature (212) are not stored on a hard disc of the data processing device (240).

4. The method according to one of the previous claims, wherein the data packet (210) comprises at least one configuration file (216), and wherein the configuration file (216) defines the configuration of the network access program (214) when executing the network access program (214).

5. The method according to one of the previous claims, wherein the hardened network access program is configured specifically for a safety-relevant service.

6. The method according to one of the previous claims, wherein the data packet (210) and the associated person-related key (218) are transmitted separately.

7. The method according to one of the previous claims, wherein the network access program (214) is modified at least partially in relation to the respective person.

8. The method according to one of the previous claims, further comprising:
- assigning the person-related authentication feature (212) of the data packet (210) and the person-related key (218) associated with the data packet (210) to a user (260, 262), and
- storing the assignment in a data base (250) of the first data processing device (200).

9. The method according to one of the previous claims, further comprising authenticating a user (260, 262) of the further data processing device (240) to the first data processing device (200) by means of a person-related authentication feature (212) such that a safety-relevant service can be executed by the user (260, 262) only in case of a positive authentication.

10. The method according to one of the previous claims, wherein the authentication feature is a software certificate and/or a password.

11. The method according to one of the previous claims, wherein the data packet (210) is an executable data packet.

12. The method according to one of the previous claims, further comprising:
- decrypting the data packet (210) into a volatile memory (242) of the further data processing device (240), and/or
- executing the network access program (214) directly from the volatile memory (242) of the further data processing device (240).

13. A computer program (282), comprising program instructions which cause a processor (270) to execute the method according to one of claims 1 to 11, when the computer program (282) is run on the processor (270).

14. A data processing device (200) comprising:
- means for executing the method according to one of claims 1 - 11.

15. A system comprising:
- a data processing device (200) according to claim 14, and
- at least the further data processing device (240) .

## Revendications

1. Procédé, comprenant :
- génération d'un paquet de données (210) comprenant au moins un programme d'accès au réseau avec fonction de durcissement (214) et au moins une caractéristique d'authentification relative à une personne (212) dans un premier dispositif de traitement de données (200), le paquet de données comprenant l'au moins une caractéristique d'authentification relative à une personne en plus de l'au moins un programme d'accès au réseau, et le paquet de données (210) étant un paquet de données d'une pluralité de paquets de données adaptés individuellement pour des utilisateurs (260, 262) respectifs, lesquels comprennent respectivement le programme d'accès aux réseau (214) et une caractéristique d'authentification relative à une personne associée à l'utilisateur respectif,
- génération d'une clé (218) relative à une personne,
- chiffrement du paquet de données (210) pour lier la caractéristique d'authentification relative à une personne (212) au programme d'accès au réseau (214), et
- mise à disposition du paquet de données (210) pour une transmission à un autre dispositif de traitement de données (240), le paquet de données (210) transmis pouvant être déchiffré, avec la clé (218) relative à une personne saisie par un utilisateur, dans l'autre dispositif de traitement de données (240) de manière à ce qu'il soit possible d'exécuter le programme d'accès au réseau (214), le programme d'accès au réseau (214) ayant ce faisant accès à la caractéristique d'authentification relative à une personne (212) et pouvant être authentifié par la caractéristique d'authentification relative à une personne (212).

2. Procédé selon la revendication 1, dans lequel le paquet de données est associé à un seul utilisateur, et dans lequel la caractéristique d'authentification relative à une personne sert à vérifier si le programme d'accès au réseau, ou l'utilisateur du programme d'accès au réseau, est autorisé à exécuter un service sécurisé.

3. Procédé selon l'une des revendications précédentes, dans lequel le programme d'accès au réseau (214) et la caractéristique d'authentification (212) peuvent être déchiffrés dans une zone d'une mémoire de travail (242) de l'installation de traitement de données (240) et peuvent être exécutés à partir de la mémoire de travail (242) de manière à ce que le programme d'accès au réseau déchiffré et la caractéristique d'authentification déchiffrée soient seulement enregistrés dans la mémoire de travail (242) pendant l'exécution du programme d'accès au réseau (214) et qu'il n'y ait pas d'enregistrement du programme d'accès au réseau (214) déchiffré et de la caractéristique d'authentification (212) déchiffrée sur un disque dur du dispositif de traitement de données (240).

4. Procédé selon l'une des revendications précédentes, dans lequel le paquet de données (210) comprend au moins un fichier de configuration (216), et dans lequel le fichier de configuration (216) préconise la configuration du programme d'accès au réseau (214) lors de l'exécution du programme d'accès au réseau (214).

5. Procédé selon l'une des revendications précédentes, dans lequel le programme d'accès au réseau avec fonction de durcissement est spécialement configuré pour un service sécurisé.

6. Procédé selon l'une des revendications précédentes, dans lequel le paquet de données (210) et la clé relative à une personne (218) associée sont transmis séparément.

7. Procédé selon l'une des revendications précédentes, dans lequel le programme d'accès aux données (214) est modifié au moins partiellement en fonction de la personne.

8. Procédé selon l'une des revendications précédentes, comprenant par ailleurs :
- affectation de la caractéristique d'authentification relative à une personne (212) du paquet de données (210) et de la clé relative à une personne (218) faisant partie du paquet de données (210), à un utilisateur (260, 262), et
- enregistrement de l'affectation dans une base de données (250) du premier dispositif de traitement de données (200).

9. Procédé selon l'une des revendications précédentes, comprenant par ailleurs l'authentification d'un utilisateur (260, 262) de l'autre dispositif de traitement de données (240) par rapport au premier dispositif de traitement de données (200) à l'aide de la caractéristique d'authentification relative à une personne (212) de manière à ce qu'un service sécurisé puisse être exécuté par l'utilisateur (260, 262) exclusivement en cas d'une authentification positive.

10. Procédé selon l'une des revendications précédentes, dans lequel la caractéristique d'authentification est un certificat de logiciel et/ou un mot de passe.

11. Procédé selon l'une des revendications précédentes, dans lequel le paquet de données (210) est un paquet de données exécutable.

12. Procédé selon l'une des revendications précédentes, comprenant par ailleurs :
- déchiffrement du paquet de données (210) dans une mémoire volatile (242) de l'autre dispositif de traitement de données (240), et/ou
- exécution du programme d'accès au réseau (214) directement à partir de la mémoire volatile (242) de l'autre dispositif de traitement de données (240).

13. Programme informatique (282) comprenant des consignes de programme, lesquelles incitent un processeur (270) à exécuter le procédé selon l'une des revendications 1 à 11 lorsque le programme informatique (282) tourne sur le processeur (270).

14. Dispositif de traitement de données (200), comprenant
- des moyens pour exécuter le procédé selon l'une des revendications 1-11.

15. Système, comprenant
- un dispositif de traitement de données (200) selon la revendication 14, et
- au moins l'autre dispositif de traitement de données (240).
